# EUROPEAN PATENT APPLICATION

(11) **EP 3 965 382 A1**
(43) Date of publication of application: **09.03.2022**
(21) Application number: 20822610.0
(22) Date of filing: 11.06.2020
(51) Int. Cl.: H04L 12/721

(54) **METHOD AND DEVICE FOR IMPLEMENTING SERVICE FUNCTION PROCESSING**

(30) Priority: 14.06.2019 CN 201910517795
(71) Applicant: Huawei Technologies Co., Ltd., Shenzhen, Guangdong 518129 (CN)
(72) Inventor: LI, Cheng, Shenzhen, Guangdong 518129 (CN)
(74) Representative: Isarpatent
(86) International application number: PCT/CN2020/095518
(87) International publication number: WO 2020/249035

(57) **Abstract**

This application discloses a method for implementing service function processing. The method includes: A network device receives a first internet protocol version 6 segment routing SRv6 packet, where the first SRv6 packet includes a first internet protocol version 6 header IPv6 header and a first network service header NSH; and the network device generates a first NSH packet based on the first SRv6 packet, where the first NSH packet includes a part obtained by removing the first IPv6 header from the first SRv6 packet; and the network device sends the first NSH packet to a service function SF entity. In addition, this application further discloses an apparatus for implementing service function processing.

## Description

This application claims priority to Chinese Patent Application No. 201910517795.6, filed with the China National Intellectual Property Administration on June 14, 2019 and entitled "METHOD AND APPARATUS FOR IMPLEMENTING SERVICE FUNCTION PROCESSING", which is incorporated herein by reference in its entirety.

### TECHNICAL FIELD

This application relates to the field of communications technologies, and in particular, to a method and an apparatus for implementing service function processing.

### BACKGROUND

Currently, a service function chaining (English: service function chaining, SFC for short) has been widely used in many networks. One SFC represents service functions (English: service function, SF for short) that a type of packet or a data flow passes through in sequence. During packet transmission, when a service function forwarder (English: service function forwarder, SFF for short) receives a packet belonging to the SFC, the service function forwarder may send the packet to an SF entity specified by the SFC on the SFF. After the SF entity performs SF processing on the packet, the SFF may receive the packet from the SF entity and send the packet to a next-hop network device.

In a segment routing (English: segment routing, SR for short) scenario, a packet transmitted in a network is an SR packet. However, there are a large quantity of SF entities that do not support SR in an existing network, and these SF entities cannot perform SF processing on the SR packet. It is highly costly to enable all SF entities in the existing network to support the SR through technical reconstruction.

### SUMMARY

Embodiments of this application provide a method and an apparatus for implementing an SFC, so that SF processing can be implemented for an SRv6 packet when an SF entity does not support SR, and technical reconstruction does not need to be performed on a large quantity of SF entities that do not support SR in an existing network, thereby reducing reconstruction costs.

According to a first aspect, an embodiment of this application provides a method for implementing service function processing. According to the method, a network device receives a first internet protocol version 6 segment routing packet, generates a first NSH packet based on the first SRv6 packet, and sends the first NSH packet to a service function SF entity. The first SRv6 packet includes a first internet protocol version 6 header (Internet Protocol version 6 Header, IPv6 Header) and a first network service header NSH. The first NSH packet includes a part obtained by removing the first IPv6 header from the first SRv6 packet. Because most SF entities in the existing network support SF processing on an NSH packet, after receiving an internet protocol version 6 segment routing (English: Internet Protocol version 6 segment routing, SRv6 for short) packet, the network device may convert the SRv6 packet into a network service header (English: network service header, NSH for short) packet, and then send the NSH packet to the SF entity, so that the SF entity can perform SF processing on the NSH packet. A part that is obtained by removing an IPv6 header and an NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support the SR. Technical reconstruction does not need to be performed on a large quantity of SF entities that do not support the SR in the existing network, thereby reducing costs of using an SFC for network upgrade.

Optionally, before the network device generates the first NSH packet based on the first SRv6 packet, the method further includes: The network device identifies a first segment identifier SID of the network device from a destination address field of the first IPv6 header, and determines that the first SID is used to indicate the network device to send a NSH packet to the SF entity. It can be learned that, based on a function that the first SID of the network device is used to indicate to send the NSH packet to the SF entity, when a structure of the IPv6 header of the SRv6 packet remains unchanged, the network device can generate the first NSH packet based on the first SRv6 packet and send the first NSH packet to the SF entity, so that the SF entity performs SF processing on the first NSH packet.

Optionally, the first NSH carries a service path identifier SPI. After receiving the first SRv6 packet, the network device further records a mapping relationship between the SPI and the first IPv6 header. After sending the first NSH packet to the SF entity, the network device further receives a second NSH packet sent by the SF entity; determines the first IPv6 header based on the mapping relationship between the SPI and the first IPv6 header; replaces the first SID carried in the destination address field of the first IPv6 header with a second SID of a next-hop network device of the network device, to obtain a second IPv6 header; and generates a second SRv6 packet based on the second NSH packet, where the second SRv6 packet includes the second IPv6 header, a second NSH, and a payload of the second NSH packet. The second NSH packet includes the second NSH, and the second NSH carries the SPI. It can be learned that the network device may determine, by recording the mapping relationship between the first IPv6 header and the SPI, the second IPv6 header for the second NSH packet returned by the SF entity, so that the network device can generate the second SRv6 packet based on the second NSH packet returned by the SF entity, and continue to forward the second SRv6 packet to the next-hop network device.

Optionally, the first NSH carries a service path identifier SPI. After receiving the first SRv6 packet, the network device replaces the first SID carried in the destination address field of the first IPv6 header with a second SID of a next-hop network device of the network device, to obtain a second IPv6 header, and records a mapping relationship between the SPI and the second IPv6 header. After sending the first NSH packet to the SF entity, the network device receives a second NSH packet sent by the SF entity; determines the second IPv6 header based on the mapping relationship between the SPI and the second IPv6 header; and generates a second SRv6 packet based on the second NSH packet, where the second SRv6 packet includes the second IPv6 header, a second NSH, and a payload of the second NSH packet. The second NSH packet includes the second NSH, and the second NSH carries the SPI. It can be learned that the network device may determine, by recording the mapping relationship between the second IPv6 header and the SPI, the second IPv6 header for the second NSH packet returned by the SF entity, so that the network device can generate the second SRv6 packet based on the second NSH packet returned by the SF entity, and continue to forward the second SRv6 packet to the next-hop network device.

Optionally, that the network device determines that the first SID is used to indicate to send the NSH packet to the service function SF entity includes: The network device obtains a function (function) part of the first SID, where the function part is used to indicate to send the NSH packet to the service function SF entity. It can be learned that, based on a function that the function part in the first SID of the network device is used to indicate to send the NSH packet to the SF entity, the first SID of the network device can be used to indicate the function. Therefore, when the structure of the IPv6 header of the SRv6 packet remains unchanged, the network device can generate the first NSH packet based on the first SRv6 packet and send the first NSH packet to the SF entity, so that the SF entity performs SF processing on the first NSH packet.

Optionally, the network device further advertises the first SID to a controller or a classifier before the network device receives the first SRv6 packet. It can be learned that the first SID that can be used to indicate the network device to send the NSH packet to the SF entity may be advertised by the network device to the controller or the classifier, so that the classifier can encapsulate the first SID into the SRv6 packet.

Optionally, the network device further records a mapping relationship between the first SID and the SF entity. It can be learned that the network device can send, to the SF entity based on the mapping relationship, the NSH packet generated based on the SRv6 packet that carries the first SID.

Optionally, the first SID is carried in border gateway protocol BGP link state LS type-length-value TLV information for sending. It can be learned that the network device may advertise the first SID to the classifier or the controller by using the BGP LS, so that the first SID can be encapsulated into the SRv6 packet.

Optionally, before the network device receives the first SRv6 packet, the network device further advertises, to the controller or the classifier, encapsulation information used to transmit the NSH packet between the network device and the SF. It can be learned that the controller and the classifier may obtain the encapsulation information that is of the NSH packet and that is advertised by the network device, so that the encapsulation information may be carried in the SRv6 packet, and the SRv6 packet can be converted into the NSH packet.

According to a second aspect, an embodiment of this application provides a method for implementing service function processing. According to the method, a classifier receives a service packet, obtains a segment routing SR policy and an NSH that correspond to the service packet, encapsulates an IPv6 header and the NSH into the service packet according to the SR policy, to generate an SRv6 packet, and sends the SRv6 packet to a next-hop network device of the classifier by using a segment list. The SR policy includes the segment list, and the segment list is used to identify a transmission path of the service packet. The segment list includes a SID of a network device, and the SID of the network device is used to indicate the network device to send a network service header NSH packet to a service function SF entity. Because most SF entities in an existing network support SF processing on an NSH packet, the classifier may encapsulate the NSH and the IPv6 header into the service packet to generate the SRv6 packet, and send the SRv6 packet, where the SID of the network device carried in the IPv6 header may be used to indicate the network device to convert the SRv6 packet into an NSH packet and send the NSH packet to the SF entity. Therefore, the SF entity can perform SF processing on the NSH packet. A part that is obtained by removing the IPv6 header and the NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support SR. Technical reconstruction does not need to be performed on a large quantity of SF entities that do not support the SR in the existing network, thereby reducing costs of using an SFC for network upgrade.

Optionally, that the classifier obtains the segment routing SR policy corresponding to the service packet includes: The classifier receives the SR policy sent by a controller. It can be learned that the SR policy may be generated by the controller and delivered to the classifier.

Optionally, that the classifier obtains the segment routing SR policy corresponding to the service packet includes: The classifier receives the SID sent by the network device, and the classifier generates the SR policy based on the SID. It can be learned that the SR policy may be generated by the classifier.

Optionally, the SID is carried in border gateway protocol BGP link state LS type-length-value TLV information for sending. It can be learned that the network device may advertise the SID to the classifier or the controller by using the BGP LS, so that the first SID can be encapsulated into the SRv6 packet.

Optionally, the classifier further receives encapsulation information used to transmit the NSH packet between the network device and the SF entity. It can be learned that the classifier may obtain the encapsulation information that is of the NSH packet and that is advertised by the network device, so that the encapsulation information may be carried in the SRv6 packet, and the SRv6 packet can be converted into the NSH packet.

According to a third aspect, an embodiment of this application provides a method for implementing service function processing. According to the method, a controller receives a SID of a network device, generates an SR policy and an NSH of a service flow, and sends the SR policy and the NSH to a classifier. The SID of the network device is used to indicate the network device to send a network service header NSH packet to a service function SF entity. The SR policy includes a segment list, the segment list is used to indicate a transmission path of the service flow, and the segment list includes the SID. Because most SF entities in an existing network support SF processing on an NSH packet, the controller may deliver the SR policy and the NSH to the classifier. The SID of the network device in the segment list carried in the SR policy may be used to indicate the network device to convert an SRv6 packet into an NSH packet and send the NSH packet to the SF entity. Therefore, the classifier may encapsulate an IPv6 header and the NSH into a service packet according to the SR policy to generate the SRv6 packet, and send the SRv6 packet, where the IPv6 header carries the SID of the network device. In this way, the SF entity can perform SF processing on the NSH packet. Apart that is obtained by removing the IPv6 header and the NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support SR. Technical reconstruction does not need to be performed on a large quantity of SF entities that do not support the SR in the existing network, thereby reducing costs of using an SFC for network upgrade.

Optionally, the SID is carried in border gateway protocol BGP link state LS type-length-value TLV information for sending. It can be learned that the network device may advertise the SID to the controller by using the BGP LS, so that the first SID can be encapsulated into the SRv6 packet.

Optionally, the controller further receives encapsulation information that is sent by the network device and that is used to transmit the NSH packet between the network device and the SF, and sends the encapsulation information to the classifier. It can be learned that the controller may obtain the encapsulation information that is of the NSH packet and that is advertised by the network device, and provide the encapsulation information to the classifier, so that the encapsulation information may be carried in the SRv6 packet, and the SRv6 packet can be converted into the NSH packet.

According to a fourth aspect, an embodiment of this application provides a network device for implementing service function processing. The network device includes a receiving unit, a processing unit, and a sending unit. The receiving unit is configured to receive a first internet protocol version 6 segment routing SRv6 packet, where the first SRv6 packet includes a first internet protocol version 6 header IPv6 header and a first network service header NSH. The processing unit is configured to generate a first NSH packet based on the first SRv6 packet, where the first NSH packet includes a part obtained by removing the first IPv6 header from the first SRv6 packet. The sending unit is configured to send the first NSH packet to a service function SF entity.

Optionally, the processing unit is further configured to: before generating the first NSH packet based on the first SRv6 packet, identify a first segment identifier SID of the network device from a destination address field of the first IPv6 header; and determine that the first SID is used to indicate the network device to send the NSH packet to the SF entity.

Optionally, the first NSH carries a service path identifier SPI. After the receiving unit receives the first SRv6 packet, the processing unit is further configured to record a mapping relationship between the SPI and the first IPv6 header. After the sending unit sends the first NSH packet to the SF entity, the receiving unit is further configured to receive a second NSH packet sent by the SF entity, where the second NSH packet includes a second NSH, and the second NSH carries the SPI. The processing unit is further configured to: determine the first IPv6 header based on the mapping relationship between the SPI and the first IPv6 header; replace the first SID carried in the destination address field of the first IPv6 header with a second SID of a next-hop network device of the network device, to obtain a second IPv6 header; and generate a second SRv6 packet based on the second NSH packet, where the second SRv6 packet includes the second IPv6 header, the second NSH, and a payload of the second NSH packet.

Optionally, the first NSH carries a service path identifier SPI. After the receiving unit receives the first SRv6 packet, the processing unit is further configured to: replace the first SID carried in the destination address field of the first IPv6 header with a second SID of a next-hop network device of the network device, to obtain a second IPv6 header; and record a mapping relationship between the SPI and the second IPv6 header. After the sending unit sends the first NSH packet to the SF entity, the receiving unit is further configured to receive a second NSH packet sent by the SF entity, where the second NSH packet includes a second NSH, and the second NSH carries the SPI. The processing unit is further configured to: determine the second IPv6 header based on the mapping relationship between the SPI and the second IPv6 header; and generate a second SRv6 packet based on the second NSH packet, where the second SRv6 packet includes the second IPv6 header, the second NSH, and a payload of the second NSH packet.

Optionally, the processor is further configured to obtain a function function part of the first SID, where the function part is used to indicate to send the NSH packet to the service function SF entity.

Optionally, before the receiving unit receives the first SRv6 packet, the sending unit is further configured to advertise the first SID to a controller or a classifier.

Optionally, the processing unit is further configured to record a mapping relationship between the first SID and the SF entity.

With reference to a fifth possible implementation of the fourth aspect, in a seventh possible implementation of the fourth aspect, the first SID is carried in border gateway protocol BGP link state LS type-length-value TLV information for sending.

Optionally, before the receiving unit receives the first SRv6 packet, the sending unit is further configured to advertise, to the controller or the classifier, encapsulation information used to transmit the NSH packet between the network device and the SF.

It may be understood that the network device provided in the fourth aspect corresponds to the method provided in the first aspect. Therefore, for technical effects of the implementations of the fourth aspect, refer to the descriptions of the implementations of the first aspect.

According to a fifth aspect, an embodiment of this application provides a classifier for implementing service function processing. The classifier includes a receiving unit, a processing unit, and a sending unit. The receiving unit is configured to receive a service packet. The processing unit is configured to: obtain a segment routing SR policy corresponding to the service packet, obtain an NSH corresponding to the service packet, and encapsulate an IPv6 header and the NSH into the service packet according to the SR policy, to generate an SRv6 packet, where the SR policy includes a segment list, the segment list is used to identify a transmission path of the service packet, the segment list includes a SID of a network device, and the SID of the network device is used to indicate the network device to send a network service header NSH packet to a service function SF entity. The sending unit is configured to send the SRv6 packet to a next-hop network device of the classifier by using the segment list.

Optionally, the receiving unit is further configured to receive, by the classifier, the SR policy sent by a controller.

Optionally, the receiving unit is further configured to receive the SID sent by the network device; and the processing unit is further configured to generate the SR policy based on the SID.

Optionally, the SID is carried in border gateway protocol BGP link state LS type-length-value TLV information for sending.

Optionally, the receiving unit is further configured to receive encapsulation information used to transmit the NSH packet between the network device and the SF entity.

It may be understood that the classifier provided in the fifth aspect corresponds to the method provided in the second aspect. Therefore, for technical effects of the implementations of the fifth aspect, refer to the descriptions of the implementations of the second aspect.

According to a sixth aspect, an embodiment of this application provides a controller for implementing service function processing. The controller includes a receiving unit, a processing unit, and a sending unit. The receiving unit is configured to receive a SID of a network device, where the SID of the network device is used to indicate the network device to send a network service header NSH packet to a service function SF entity. The processing unit is configured to generate an SR policy of a service flow and an NSH of the service flow, where the SR policy includes a segment list, the segment list is used to indicate a transmission path of the service flow, and the segment list includes the SID. The sending unit is configured to send the SR policy and the NSH to a classifier.

Optionally, the SID is carried in border gateway protocol BGP link state LS type-length-value TLV information for sending.

Optionally, the receiving unit is further configured to receive encapsulation information that is sent by the network device and that is used to transmit the NSH packet between the network device and the SF; and the sending unit is further configured to send the encapsulation information to the classifier.

It may be understood that the apparatus provided in the sixth aspect corresponds to the method provided in the first aspect. Therefore, for technical effects of the implementations of the sixth aspect, refer to the descriptions of the implementations of the first aspect.

According to a seventh aspect, an embodiment of this application further provides a network device. The network device includes a processor and a memory. The memory stores instructions. When the processor executes the instructions, the network device is enabled to perform the method according to any implementation of the first aspect.

According to an eighth aspect, an embodiment of this application further provides a classifier. The classifier includes a processor and a memory. The memory stores instructions. When the processor executes the instructions, the network device is enabled to perform the method according to any implementation of the second aspect.

According to a ninth aspect, an embodiment of this application further provides a controller. The controller includes a processor and a memory. The memory stores instructions. When the processor executes the instructions, the network device is enabled to perform the method according to any implementation of the third aspect.

According to a tenth aspect, an embodiment of this application further provides a computer-readable storage medium. The computer-readable storage medium stores instructions. When the instructions are run on a computer or a processor, the computer or the processor is enabled to perform the method according to any implementation of the first aspect, the method according to any implementation of the second aspect, or the method according to any implementation of the third aspect.

### BRIEF DESCRIPTION OF DRAWINGS

To describe the technical solutions in the embodiments of this application more clearly, the following briefly describes the accompanying drawings for describing the embodiments. It is clear that, the accompanying drawings in the following description show merely some embodiments of this application, and an ordinary person skilled in the art may derive other drawings from these accompanying drawings.
FIG. 1 is a schematic diagram of a framework of a network system in an application scenario according to an embodiment of this application;
FIG. 2 is a schematic flowchart of a method 200 for implementing service function processing according to an embodiment of this application;
FIG. 3 is a schematic structural diagram of an example of a BGP LS TLV according to an embodiment of this application;
FIG. 4 is a schematic structural diagram of an example of an SRv6 packet according to an embodiment of this application;
FIG. 5 is a schematic diagram of an example of an NSH header format according to an embodiment of this application;
FIG. 6 is a schematic flowchart of a method 600 for implementing service function processing according to an embodiment of this application;
FIG. 7 is a schematic flowchart of a method 700 for implementing service function processing according to an embodiment of this application;
FIG. 8 is a schematic flowchart of a method 800 for implementing service function processing according to an embodiment of this application;
FIG. 9 is a schematic structural diagram of an example of a SID of a network device according to an embodiment of this application;
FIG. 10 is a schematic structural diagram of a network device 1000 for implementing service function processing according to an embodiment of this application;
FIG. 11 is a schematic structural diagram of a classifier 1100 for implementing service function processing according to an embodiment of this application; and
FIG. 12 is a schematic structural diagram of a controller 1200 for implementing service function processing according to an embodiment of this application.

### DESCRIPTION OF EMBODIMENTS

In an SR scenario, a packet transmitted in a network is an SR packet, in other words, a packet transmitted between SFFs is an SR packet. However, if the SFF sends the SR packet to an SF entity that does not support SR, the SF entity cannot process the SR packet. If the SF entity is upgraded, the SF entity can support the SR, and the foregoing problem can be resolved, but upgrading the SF entity is costly.

To resolve the foregoing problem, in an embodiment of this application, after receiving an SRv6 packet, a network device may convert the SRv6 packet into an NSH packet, and then send the NSH packet to an SF entity. Most SF entities in an existing network support processing on an NSH packet. Therefore, the SF entity can also perform SF processing on the NSH packet when the SF entity is not upgraded. A part that is obtained by removing an IPv6 header and an NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet even when the SF entity does not support the SR. Technical reconstruction does not need to be performed on a large quantity of SF entities that do not support the SR in the existing network, thereby reducing costs of using an SFC for network upgrade.

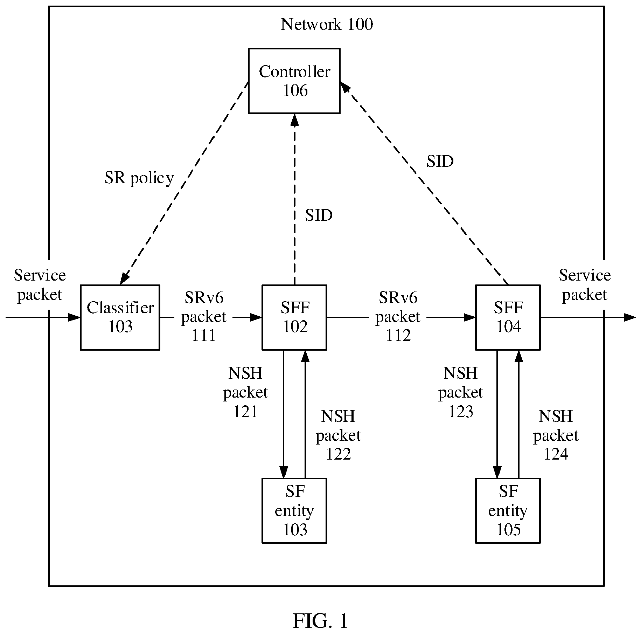

For example, a scenario in this embodiment of this application may be applied to a network system 100 shown in FIG. 1.

An SR policy of a service flow may be set on a classifier (English: classifier) 101, and the SR policy may include a segment list (English: segment list) and an NSH. When the classifier 101 receives a service packet of the service flow, the classifier 101 may encapsulate an internet protocol version 6 header (English: internet protocol version 6 header, IPv6 Header for short) and the NSH into the service packet according to the SR policy of the service flow, to generate an SRv6 packet 111. The IPv6 header of the SRv6 packet 111 includes a segment list of the service flow. The segment list is used to indicate a transmission path of the service flow in the network system 100, and includes a segment identifier (English: segment identifier, SID for short) of each hop of network device on the transmission path. It is assumed that the transmission path of the service flow is from the classifier 101 to an SFF 102 and then from the SFF 102 to an SFF 104, and the segment list of the service flow includes a SID of the SFF 102 and a SID of the SFF 104. A destination address (English: destination address, DA for short) field of the IPv6 header in the SRv6 packet 111 carries a SID of a next-hop network device of the classifier 101, that is, the SID of the SFF 102. Therefore, the classifier 101 may send the SRv6 packet 111 to the SFF 102 based on the SID of the SFF 102 carried in the DA field of the IPv6 header in the SRv6 packet 111.

When the SFF 102 receives the SRv6 packet 111, the SFF 102 may convert the SRv6 packet 111 into an NSH packet 121, where the NSH packet 121 includes a part obtained by removing the IPv6 header from the SRv6 packet 111, that is, includes the NSH in the SRv6 packet 111 and a payload after the NSH. Then, the SFF 102 may send the NSH packet 121 to an SF entity 103. After performing SF processing on the NSH packet 121, the SF entity 103 sends a processed NSH packet 122 to the SFF 102. The SFF 102 may convert the received NSH packet 122 into an SRv6 packet 112. An IPv6 header of the SRv6 packet 112 is obtained by updating a SID of a next-hop network device of the SFF 102 in the segment list of the IPv6 header in the SRv6 packet 111 to the DA field of the IPv6 header in the SRv6 packet 111. In other words, a DA field of the IPv6 header in the SRv6 packet 112 carries the SID of the SFF 104. Therefore, the SFF 102 may send the SRv6 packet 112 to the SFF 104 based on the SID of the SFF 104 carried in the DA field of the IPv6 header in the SRv6 packet 112.

When the SFF 104 receives the SRv6 packet 112, the SFF 104 may convert the SRv6 packet 112 into an NSH packet 123, where the NSH packet 123 includes a part obtained by removing the IPv6 header from the SRv6 packet 112, that is, includes the NSH in the SRv6 packet 112 and the payload after the NSH. Then, the SFF 104 may send the NSH packet 123 to an SF entity 105. After performing SF processing on the NSH packet 123, the SF entity 105 sends a processed NSH packet 124 to the SFF 104. Because the SFF 104 is a tail node on the transmission path of the service flow in the network system 100, the SFF 104 may obtain a payload of the received NSH packet 124, to generate the service packet of the service flow.

In addition, in some possible implementations, the network system 100 may further include a controller (English: controller) 106. The controller 106 may receive SIDs reported by the SFF 102 and an SFF 103, and generate the SR policy of the service flow based on the SIDs reported by the SFF 102 and the SFF 103. The SR policy of the service flow may be generated by the controller 106 and delivered to the classifier 101.

It may be understood that the foregoing scenario is merely an example of a scenario provided in this embodiment of this application, and this embodiment of this application is not limited to this scenario.

With reference to the accompanying drawings, the following uses embodiments to describe in detail specific implementations of a method and an apparatus for implementing service function processing in the embodiments of this application.

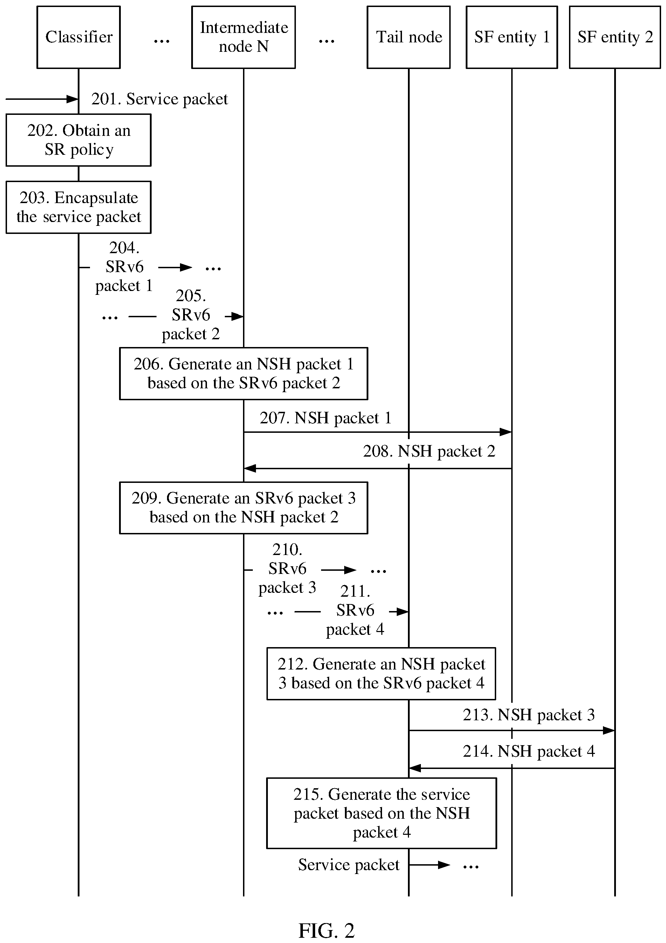

FIG. 2 is a schematic flowchart of a method 200 for implementing service function processing according to an embodiment of this application. Specifically, the method 200 may include the following steps.

201. A classifier receives a service packet.

202. The classifier determines a service flow corresponding to the service packet, and obtains an SR policy and an NSH of the service flow.

In specific implementation, the SR policy and an NSH 1 of the service flow are set on the classifier. When the classifier receives the service packet, the classifier may determine whether the service packet belongs to the service flow, based on whether a packet feature of the service packet matches a packet feature of the service flow. When the service packet belongs to the service flow, the classifier may obtain the SR policy and the NSH 1 of the service flow. For example, the packet feature may be a 5-tuple.

The NSH 1 of the service flow may be encapsulated into an SRv6 packet of the service flow, so that a network device on a transmission path of the service flow can convert the SRv6 packet into an NSH packet and then send the NSH packet to an SF entity. In this way, the SF entity can perform SF processing on the NSH packet.

The SR policy may include a segment list of the service flow. The segment list of the service flow may be used to indicate the transmission path of the service flow. Specifically, the segment list may include a SID of each hop of network device on the transmission path of the service flow. After the segment list is encapsulated into the service packet of the service flow to form the SRv6 packet, each hop of network device on the transmission path may identify a SID of a next-hop network device from the segment list carried in the SRv6 packet, and send the SRv6 packet to the next-hop network device based on the SID, so that the SRv6 packet can be transmitted along the transmission path. For example, in the example scenario shown in FIG. 1, the transmission path of the service flow is from the classifier 101 to the SFF 102, and then from the SFF 102 to the SFF 103. In this case, the segment list of the service flow may include the SID of the SFF 102 and the SID of the SFF 104. After the segment list is encapsulated into the service packet of the service flow to generate the SRv6 packet, the classifier 101 may identify the SID of the next-hop SFF 102 from the segment list carried in the SRv6 packet, and send the SRv6 packet to the SFF 102. The SFF 102 may identify the SID of the next-hop SFF 104 from the segment list carried in the SRv6 packet, and send the SRv6 packet to the SFF 104.

In addition, in some implementations, the SR policy may further include a SID corresponding to the SF entity, and the SID is used to indicate the network device on the transmission path of the service flow to convert the SRv6 packet of the service flow into an NSH packet, and send the NSH packet to the SF entity.

In an example, in addition to the SID of each hop of network device on the transmission path of the service flow, the segment list in the SR policy may further include the SID of the SF entity that the service flow needs to pass through. In this way, the network device may convert the SRv6 packet into an NSH packet based on the SID of the SF entity carried in the SRv6 packet, and send the NSH packet to the SF entity. For example, in the example scenario shown in FIG. 1, the transmission path of the service flow is from the classifier 101 to the SFF 102 and then from the SFF 104 to the SFF 103, the service flow needs to be sent at the SFF 102 to the SF entity 103 for processing, and the service flow needs to be sent at the SFF 104 to the SF entity 105 for processing. In this case, the segment list of the service flow may include the SID of the SFF 102, a SID of the SF entity 103, the SID of the SFF 104, and a SID of the SF entity 105. The SID of the SF entity 103 is used to indicate the SFF 102 to convert the SRv6 packet of the service flow into an NSH packet and send the NSH packet to the SF entity 103. The SID of the SF entity 105 is used to indicate the SFF 104 to convert the SRv6 packet of the service flow into an NSH packet and send the NSH packet to the SF entity 105.

In another example, in addition to indicating the transmission path of the service flow, the SID of the network device in the segment list of the service flow may be further used to indicate the network device to send, to the SF entity, an NSH packet including a part obtained by removing the IPv6 header from the SRv6 packet. In this way, the network device may convert the SRv6 packet into the NSH packet based on the SID of the network device carried in the SRv6 packet, and send the NSH packet to the SF entity. For example, in the example scenario shown in FIG. 1, the transmission path of the service flow is from the classifier 101 to the SFF 102 and then from the SFF 104 to the SFF 103, the service flow needs to be sent at the SFF 102 to the SF entity 103 for processing, and the service flow needs to be sent at the SFF 104 to the SF entity 105 for processing. In this case, the segment list of the service flow may include the SID of the SFF 102 and the SID of the SFF 104. In addition to indicating the classifier 101 to send the SRv6 packet of the service flow to the SFF 102, the SID of the SFF 102 is further used to indicate the SFF 102 to convert the SRv6 packet of the service flow into an NSH packet and send the NSH packet to the SF entity 103. In addition to indicating the SFF 102 to send the SRv6 packet of the service flow to the SFF 104, the SID of the SFF 104 is further used to indicate the SFF 104 to convert the SRv6 packet of the service flow into an NSH packet and send the NSH packet to the SF entity 105.

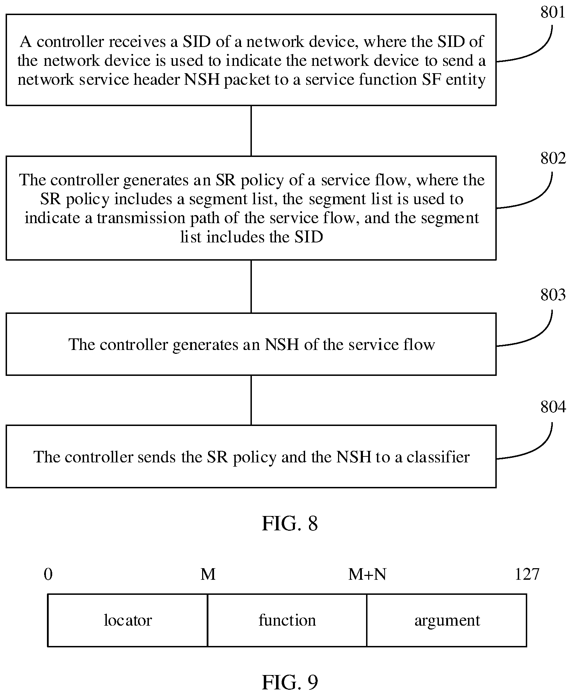

In an example, for a format of the SID of the network device, refer to an example format shown in FIG. 9. The format of the SID includes a locator (English: locator) field, a function (English: function) field, and an argument (English: argument) field. The locator field carries indication information used to indicate the network device. The function field is used to indicate indication information of an operation to be performed by the network device. If the SID of the network device is used to indicate the network device to convert the SRv6 packet into the NSH packet and send the NSH packet to the SF entity, the indication information carried in the function field of the SID corresponds to the SF entity, and the indication information is used to indicate to convert the SRv6 packet into the NSH packet and send the NSH packet to the SF entity.

It may be understood that, the SR policy and the NSH of the service flow may be generated by different network devices based on different network architectures.

In an example, each hop of network device on the transmission path of the service flow may advertise the SID to the classifier, and the classifier may generate the SR policy of the service flow based on the received SID. For example, in the example scenario shown in FIG. 1, the SFF 102 may advertise the SID of the SFF 102 to the classifier 101, and the SFF 104 may advertise the SID of the SFF 104 to the classifier 101. The classifier 101 may generate the SR policy based on the SID of the SFF 102 and the SID of the SFF 104. The SID of the SFF 102 is used to indicate the SFF 102 to convert the SRv6 packet of the service flow into an NSH packet and send the NSH packet to the SF entity 103. The SID of the SFF 104 is used to indicate the SFF 104 to convert the SRv6 packet of the service flow into an NSH packet and send the NSH packet to the SF entity 105. For another example, in the example scenario shown in FIG. 1, the SFF 102 may advertise the SID of the SFF 102 and the SID of the SF entity 103 to the classifier 101, and the SFF 104 may advertise the SID of the SFF 104 and the SID of the SF entity 105 to the classifier 101. The classifier 101 may generate the SR policy based on the SID of the SFF 102, the SID of the SF entity 103, the SID of the SFF 104, and the SID of the SF entity 105. In addition, the NSH 1 of the service flow may also be generated by the classifier.

In another example, each hop of network device on the transmission path of the service flow may advertise the SID to the controller, and the controller may generate the SR policy of the service flow based on the received SID, and deliver the SR policy to the classifier. For example, in the example scenario shown in FIG. 1, the SFF 102 may advertise the SID of the SFF 102 to the controller 106, and the SFF 104 may advertise the SID of the SFF 104 to the controller 106. The controller 106 may generate the SR policy based on the SID of the SFF 102 and the SID of the SFF 104, and deliver the SR policy to the classifier 101. The SID of the SFF 102 is used to indicate the SFF 102 to convert the SRv6 packet of the service flow into an NSH packet and send the NSH packet to the SF entity 103. The SID of the SFF 104 is used to indicate the SFF 104 to convert the SRv6 packet of the service flow into an NSH packet and send the NSH packet to the SF entity 105. For another example, in the example scenario shown in FIG. 1, the SFF 102 may advertise the SID of the SFF 102 and the SID of the SF entity 103 to the controller 106, and the SFF 104 may advertise the SID of the SFF 104 and the SID of the SF entity 105 to the controller 106. The controller 106 may generate the SR policy based on the SID of the SFF 102, the SID of the SF entity 103, the SID of the SFF 104, and the SID of the SF entity 105, and deliver the SR policy to the classifier 101. In addition, the NSH 1 of the service flow may also be generated by the controller and delivered to the classifier.

It should be noted that, for the SID that is advertised by the network device and is used to indicate the network device to convert the SRv6 packet into the NSH packet and send the NSH packet to the SF entity, the network device may record a mapping relationship between the SID and the SF entity. When receiving the SRv6 packet that carries the SID, the network device may determine the SF entity based on the mapping relationship, so as to send the NSH packet converted from the SRv6 packet to the SF entity.

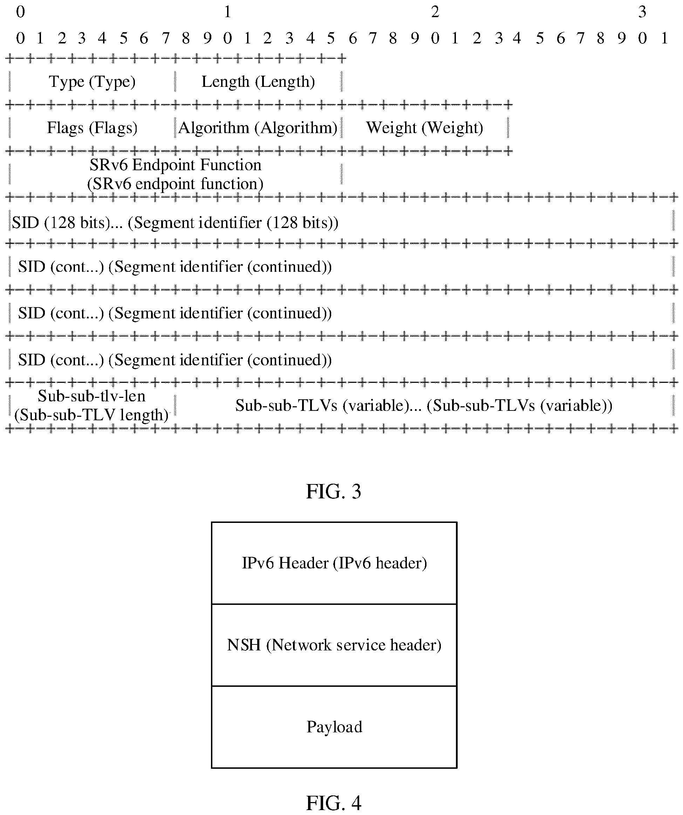

In some implementations, the network device may advertise the SID to the controller or the classifier by carrying the SID in border gateway protocol (English: Border Gateway Protocol, BGP for short) link state (English: Link State, LS for short) type-length-value (English: Type Length Value, TLV for short) information. For example, in an example of a BGP LS TLV shown in FIG. 3, a SID field of the BGP LS TLV may carry a SID to be advertised by the network device, and an SRv6 endpoint function (English: SRv6 Endpoint Function) field of the BGP LS TLV may carry a function type of the SID. For the SID used to indicate the network device to convert the SRv6 packet into the NSH packet and send the NSH packet to the SF entity, a function type of the SID may be defined as, for example, END.NSH. If the SID field in the TLV information carries the SID used to indicate the network device to convert the SRv6 packet into the NSH packet and send the NSH packet to the SF entity, the SRv6 endpoint function field in the TLV information may carry END.NSH used as the function type of the SID.

In addition, on the basis that the network device advertises, to the controller or the classifier, the SID used to indicate to convert the SRv6 packet into the NSH packet and send the NSH packet to the SF entity, the network device may further advertise, to the controller or the classifier, encapsulation information used to transmit the NSH packet between the network device and the SF entity. The classifier may add the encapsulation information in the SRv6 packet, so that the network device can convert the SRv6 packet into an NSH packet. For example, in the example of the BGP LS TLV shown in FIG. 3, a sub-sub-TLV (English: Sub-sub-TLV) field of the BGP LS TLV may carry the encapsulation information. The encapsulation information is specifically packet encapsulation information corresponding to a transmission protocol used between the network device and the SF entity, for example, an Ethernet transmission protocol or an IPv6.

203. The classifier encapsulates an IPv6 header 1 and the NSH 1 into the service packet according to the SR policy, to generate an SRv6 packet 1.

In specific implementation, the classifier may obtain the segment list and the NSH 1 of the service flow from the SR policy, generate the IPv6 header 1 carrying the segment list, and encapsulate the IPv6 header 1 and the NSH 1 into the service packet to generate the SRv6 packet 1.

It may be understood that, for a structure of the SRv6 packet mentioned in this embodiment, refer to an SRv6 packet example shown in FIG. 4. The SRv6 packet may include the IPv6 header, the NSH, and a payload, where the NSH is encapsulated outside the payload, and the IPv6 header is encapsulated outside the NSH. Specifically, for the SRv6 packet 1, the service packet may be used as the payload, and the NSH 1 is encapsulated outside the service packet, and the IPv6 header 1 is encapsulated outside the NSH 1, so as to form the SRv6 packet 1. Similarly, for structures of an SRv6 packet 2, an SRv6 packet 3, and an SRv6 packet 4 mentioned below, refer to the SRv6 packet example shown in FIG. 4.

The IPv6 header 1 includes a source address (English: source address, SA for short) field, a DA field, and a segment routing header (English: segment routing header, SRH for short). The segment list is carried in the SRH. The SA field carries a SID of a head node, namely, the SID of the classifier. The DA field carries a SID of a next-hop network device of the classifier, and the SID of the next-hop network device of the classifier may be obtained from the segment list. For example, in the example scenario shown in FIG. 1, in the SRv6 packet 111 generated by the classifier 101, the SA field of the IPv6 header carries the SID of the classifier 101, and the DA field of the IPv6 header carries the SID of the SFF 102. The SFF 102 is the next-hop network device of the classifier 101.

204. The classifier sends the SRv6 packet 1 to a network device corresponding to the SID carried in the destination address field of the IPv6 header 1.

It may be understood that the SID carried in the DA field of the IPv6 header 1 is the SID of the next-hop network device of the classifier. Therefore, the classifier may send the SRv6 packet 1 to the next-hop network device based on the SID. In this way, the SRv6 packet of the service flow can be transmitted along the transmission path of the service flow.

For any intermediate node, such as a network device, on the transmission path of the service flow, in an SRv6 packet that is of the service flow and that is received by the intermediate node, a DA field of an IPv6 header carries a SID of the intermediate node. The intermediate node may identify a SID of a next-hop network device of the intermediate node from the segment list carried in the IPv6 header of the SRv6 packet, update the SID of the intermediate node to the SID of the next-hop network device of the intermediate node in the DA field of the IPv6 header of the SRv6 packet, and then send an updated SRv6 packet to the next-hop network device of the intermediate node.

For an intermediate node N, if the service flow needs to be sent at the intermediate node N to an SF entity 1 for SF processing, the intermediate node N may perform the following steps 205 to 210.

205. The intermediate node N receives an SRv6 packet 2.

It may be understood that, if the intermediate node N on the transmission path of the service flow is a next-hop network device of the classifier, the SRv6 packet 2 is the SRv6 packet 1. If there is another intermediate node between the classifier and the intermediate node N on the transmission path of the service flow, the SRv6 packet 2 is a packet sent by a previous-hop intermediate node of the intermediate node N to the intermediate node N.

206. The intermediate node N generates an NSH packet 1 based on the SRv6 packet 2.

207. The intermediate node N sends the NSH packet 1 to the SF entity 1.

In specific implementation, the intermediate node N may remove an IPv6 header 2 from the SRv6 packet 2, to obtain an NSH 2 and a payload in the SRv6 packet 2; and then encapsulate the NSH 2 and the payload into encapsulation information used to transmit the NSH packet between the intermediate node and the SF entity 1, to obtain the NSH packet 1. Then, the intermediate node N may send the NSH packet 1 to the SF entity 1.

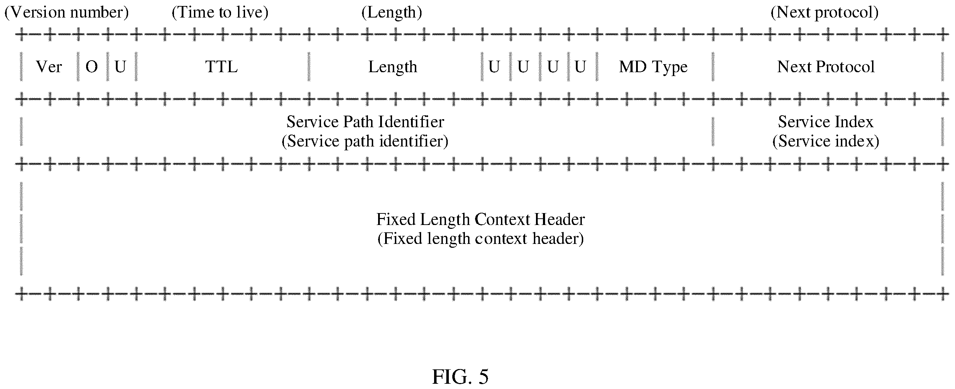

Each NSH mentioned in this embodiment carries a service path identifier (English: service path identifier, SPI for short) and a service index (English: service index, SI for short). The SPI and the SI may be used to indicate an SF that the service flow needs to pass through. Specifically, for example, for the NSH, refer to a header format shown in FIG. 5. NSHs in packets of a same service flow carry a same SPI.

It may be understood that the IPv6 header 2 in the SRv6 packet 2 may carry a SID used to indicate the intermediate node N to convert the SRv6 packet into an NSH packet and send the NSH packet to the SF entity 1. When the intermediate node N identifies the SID from the SRv6 packet 2, the intermediate node N may convert the SRv6 packet 2 into the NSH packet 1, and send the NSH packet 1 to the SF entity 1. For example, in the example scenario shown in FIG. 1, if the SFF 101 identifies the SID of the SF entity 103 from the SRv6 packet 111, the SFF 101 may convert the SRv6 111 into the NSH packet 121, and send the NSH packet 121 to the SF entity 103. For another example, in the example scenario shown in FIG. 1, if the SFF 101 identifies the SID of the SFF 101 from the SRv6 packet 111, and determines that the SID of the SFF 101 is used to indicate the SFF 101 to convert the SRv6 packet into the NSH packet and send the NSH packet to the SF 103, the SFF 101 may convert the SRv6 111 into the NSH packet 121, and send the NSH packet 121 to the SF entity 103.

208. The intermediate node N receives an NSH packet 2 obtained by the SF entity 1 by performing SF processing on the NSH packet 1.

209. The intermediate node N generates an SRv6 packet 3 based on the NSH packet 2.

In specific implementation, the intermediate node N may identify the SID of the next-hop network device of the intermediate node N from the segment list carried in the IPv6 header 2 of the SRv6 packet 2, and replace the SID of the intermediate node N carried in the DA field of the IPv6 header 2 with the SID of the next-hop network device of the intermediate node N, so as to obtain an IPv6 header 3 of the SRv6 packet 3. The intermediate node N may obtain an NSH 3 and a payload from the NSH packet 2, and generate the SRv6 packet 3 based on the IPv6 header 3, the NSH 3, and the payload of the NSH packet 2.

It should be noted that, after the SRv6 packet 2 is converted into the NSH packet 1 and the NSH packet 1 is sent to the SF entity 1, the NSH packet 2 returned by the SF entity 1 needs to be converted into the SRv6 packet 3, so that the intermediate node N can send the SRv6 packet 3 to the next-hop network device. Therefore, because the NSH 2 of the NSH packet 1 and the NSH 3 of the NSH packet 2 carry a same SPI, the intermediate node N may record a mapping relationship between the SPI and the IPv6 header. In this way, the intermediate node N can find the corresponding IPv6 header based on the SPI carried in the NSH packet 2, and convert the NSH packet 2 into the SRv6 packet 3 by using the IPv6 header.

In an example, after receiving the SRv6 packet 2, the intermediate node N may identify the SPI from the NSH 2 of the SRv6 packet 2, and record a mapping relationship between the IPv6 header 2 in the SRv6 packet 2 and the SPI. After sending the NSH packet 1 to the SF entity 1 and receiving the NSH packet 2 sent by the SF entity 1, the intermediate node N may identify the SPI from the NSH 3 of the NSH packet 2, and find, based on the recorded mapping relationship, the IPv6 header 2 corresponding to the SPI. Then, the intermediate node N may update the IPv6 header 2 to the IPv6 header 3, and convert the NSH packet 2 into the SRv6 packet 3 based on the IPv6 header 3.

In another example, after receiving the SRv6 packet 2, the intermediate node N may identify the SPI from the NSH 2 of the SRv6 packet 2, update the IPv6 header 2 of the SRv6 packet 2 to the IPv6 header 3, and record a mapping relationship between the IPv6 header 3 and the SPI. After sending the NSH packet 1 to the SF entity 1 and receiving the NSH packet 2 sent by the SF entity 1, the intermediate node N may identify the SPI from the NSH 3 of the NSH packet 2, and find, based on the recorded mapping relationship, the IPv6 header 3 corresponding to the SPI. Then, the intermediate node N may convert the NSH packet 2 into the SRv6 packet 3 based on the IPv6 header 3.

210. The intermediate node N sends the SRv6 packet 3 to a network device corresponding to the SID carried in the destination address field of the IPv6 header 2 in the SRv6 packet 3.

It may be understood that the SID carried in the DA field of the IPv6 header 3 is the SID of the next-hop network device of the intermediate node N. Therefore, the classifier may send the SRv6 packet 3 to the next-hop network device based on the SID. In this way, the SRv6 packet of the service flow can continue to be transmitted along the transmission path of the service flow.

For a network device, such as a tail node, on the transmission path of the service flow, in an SRv6 packet that is of the service flow and that is received by the tail node, a DA field of an IPv6 header carries a SID of the tail node, and a segments left (English: segments left, SL for short) value of an SRH is 0. The tail node may obtain a payload from the SRv6 packet, and generate a service packet of the service flow based on the payload.

If the service flow needs to be sent at the tail node to an SF entity 2 for SF processing, the tail node may perform the following steps 211 to 215.

211. The tail node receives an SRv6 packet 4.

It may be understood that, if the tail node on the transmission path of the service flow is a next-hop network device of the intermediate node N, the SRv6 packet 4 is the SRv6 packet 3. If there is another intermediate node between the intermediate node N and the tail node on the transmission path of the service flow, the SRv6 packet 4 is a packet sent by a previous-hop intermediate node of the tail node to the tail node.

212. The tail node generates an NSH packet 3 based on the SRv6 packet 4.

213. The tail node sends the NSH packet 3 to the SF entity 2.

In specific implementation, the tail node may remove an IPv6 header 4 from the SRv6 packet 4, to obtain an NSH 4 and a payload in the SRv6 packet 4; and then encapsulate the NSH 4 and the payload into encapsulation information used to transmit the NSH packet between the tail node and the SF entity 2, to obtain the NSH packet 3. Then, the tail node may send the NSH packet 3 to the SF entity 2.

It may be understood that the IPv6 header 4 in the SRv6 packet 4 may carry a SID used to indicate the tail node to convert the SRv6 packet into an NSH packet and send the NSH packet to the SF entity 2. When the tail node identifies the SID from the SRv6 packet 4, the tail node may convert the SRv6 packet 4 into the NSH packet 3, and send the NSH packet 3 to the SF entity 2. For example, in the example scenario shown in FIG. 1, if the SFF 104 identifies the SID of the SF entity 104 from the SRv6 packet 112, the SFF 104 may convert the SRv6 112 into the NSH packet 123, and send the NSH packet 123 to the SF entity 105. For another example, in the example scenario shown in FIG. 1, if the SFF 104 identifies the SID of the SFF 104 from the SRv6 packet 112, and determines that the SID of the SFF 104 is used to indicate the SFF 104 to convert the SRv6 packet into the NSH packet and send the NSH packet to the SF 105, the SFF 104 may convert the SRv6 112 into the NSH packet 123, and send the NSH packet 123 to the SF entity 105.

214. The tail node receives an NSH packet 4 obtained by the SF entity 2 by performing SF processing on the NSH packet 3.

215. The tail node generates the service packet based on a payload of the NSH packet 4.

It may be understood that the tail node identifies, from an SRH of the IPv6 header 4 in the SRv6 packet 4, an SL value is 0. The tail node may determine that the NSH packet 4 returned by the SF entity 2 does not need to be converted into an SRv6 packet after the SRv6 packet 4 is converted into the NSH packet 3 and the NSH packet 3 is sent to the SF entity 2. Therefore, the tail node may obtain the payload from the NSH packet 4, and generate the service packet of the service flow based on the payload.

In this embodiment, SF entities such as the SF entity 1 and the SF entity 2, for example, value-added servers (English: value-added server, VAS for short), may be network devices used to carry SFs.

It may be understood that, in the example scenario shown in FIG. 1, the classifier 101 is equivalent to the classifier mentioned in the method 200, the SFF 102 is equivalent to the intermediate node N mentioned in the method 200, and the SFF 104 is equivalent to the tail node mentioned in the method 200; the SF entity 103 is equivalent to the SF entity 1 mentioned in the method 200, and the SF entity 105 is equivalent to the SF entity 2 mentioned in the method 200; the SRv6 packet 111 is equivalent to the SRv6 packet 1 mentioned in the method 200 and is also equivalent to the SRv6 packet 2 mentioned in the method 200, and the SRv6 packet 112 is equivalent to the SRv6 packet 3 mentioned in the method 200 and is also equivalent to the SRv6 packet 4 mentioned in the method 200; and the NSH packet 121 is equivalent to the NSH packet 1 mentioned in the method 200, the NSH packet 122 is equivalent to the NSH packet 2 mentioned in the method 200, the NSH packet 123 is equivalent to the NSH packet 3 mentioned in the method 200, and the NSH packet 124 is equivalent to the NSH packet 4 mentioned in the method 200.

In this embodiment, because most SF entities in an existing network support SF processing on an NSH packet, after receiving an SRv6 packet, the network device such as the intermediate node or the tail node may convert the SRv6 packet into an NSH packet, and then send the NSH packet to the SF entity such as the SF entity 1 or the SF entity 2, so that the SF entity can perform SF processing on the NSH packet. A part that is obtained by removing an IPv6 header and an NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support SR. Technical reconstruction does not need to be performed on a large quantity of SF entities that do not support the SR in the existing network, thereby reducing costs of using an SFC for network upgrade.

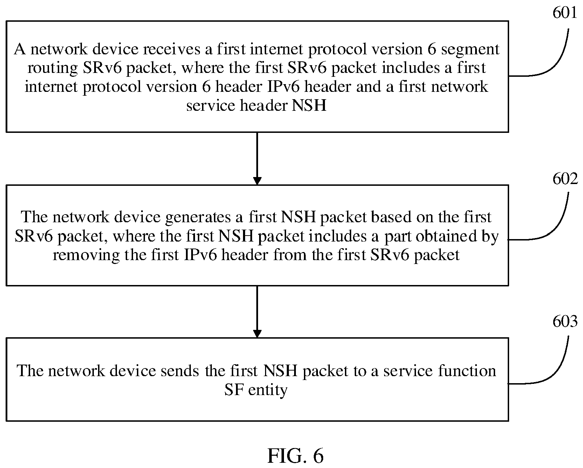

FIG. 6 is a schematic flowchart of a method 600 for implementing service function processing according to an embodiment of this application. The method 600 may include the following steps.

601. A network device receives a first internet protocol version 6 segment routing SRv6 packet, where the first SRv6 packet includes a first internet protocol version 6 header IPv6 header and a first network service header NSH.

602. The network device generates a first NSH packet based on the first SRv6 packet, where the first NSH packet includes a part obtained by removing the first IPv6 header from the first SRv6 packet.

603. The network device sends the first NSH packet to a service function SF entity.

In some possible implementations, before the network device generates the first NSH packet based on the first SRv6 packet, the method 600 further includes:
The network device identifies a first segment identifier SID of the network device from a destination address field of the first IPv6 header; and
the network device determines that the first SID is used to indicate the network device to send the NSH packet to the SF entity.

In some possible implementations, the first NSH carries a service path identifier SPI, and the method 600 further includes:
After receiving the first SRv6 packet, the network device records a mapping relationship between the SPI and the first IPv6 header;
after sending the first NSH packet to the SF entity, the network device receives a second NSH packet sent by the SF entity, where the second NSH packet includes a second NSH, and the second NSH carries the SPI;
the network device determines the first IPv6 header based on the mapping relationship between the SPI and the first IPv6 header;
the network device replaces the first SID carried in the destination address field of the first IPv6 header with a second SID of a next-hop network device of the network device, to obtain a second IPv6 header; and
the network device generates a second SRv6 packet based on the second NSH packet, where the second SRv6 packet includes the second IPv6 header, the second NSH, and a payload of the second NSH packet.

In some possible implementations, the first NSH carries the service path identifier SPI, and the method 600 further includes:
After receiving the first SRv6 packet, the network device replaces the first SID carried in the destination address field of the first IPv6 header with a second SID of a next-hop network device of the network device, to obtain a second IPv6 header;
the network device records a mapping relationship between the SPI and the second IPv6 header;
after sending the first NSH packet to the SF entity, the network device receives a second NSH packet sent by the SF entity, where the second NSH packet includes a second NSH, and the second NSH carries the SPI;
the network device determines the second IPv6 header based on the mapping relationship between the SPI and the second IPv6 header; and
the network device generates a second SRv6 packet based on the second NSH packet, where the second SRv6 packet includes the second IPv6 header, the second NSH, and a payload of the second NSH packet.

In some possible implementations, that the network device determines that the first SID is used to indicate to send the NSH packet to the service function SF entity includes:
The network device obtains a function function part of the first SID, where the function part is used to indicate to send the NSH packet to the service function SF entity.

In some possible implementations, the method 600 further includes:
Before the network device receives the first SRv6 packet, the network device advertises the first SID to a controller or a classifier.

In some possible implementations, the method 600 further includes:
The network device records a mapping relationship between the first SID and the SF entity.

In some possible implementations, the first SID is carried in border gateway protocol BGP link state LS type-length-value TLV information for sending.

In some possible implementations, the method 600 further includes:
before the network device receives the first SRv6 packet, the network device advertises, to the controller or the classifier, encapsulation information used to transmit the NSH packet between the network device and the SF.

In an example, the network device mentioned in the method 600 may be the intermediate node N mentioned in the method 200, the SF entity mentioned in the method 600 may be the SF entity 1 mentioned in the method 200, the first SRv6 packet mentioned in the method 600 may be the SRv6 packet 2 mentioned in the method 200, the first NSH packet mentioned in the method 600 may be the NSH packet 1 mentioned in the method 200, the second SRv6 packet mentioned in the method 600 may be the SRv6 packet 3 mentioned in the method 200, and the second NSH packet mentioned in the method 600 may be the NSH packet 4 mentioned in the method 200. In another example, the network device mentioned in the method 600 may be the tail node mentioned in the method 200, the SF entity mentioned in the method 600 may be the SF entity 2 mentioned in the method 200, the first SRv6 packet mentioned in the method 600 may be the SRv6 packet 4 mentioned in the method 200, the first NSH packet mentioned in the method 600 may be the NSH packet 3 mentioned in the method 200, and the second NSH packet mentioned in the method 600 may be the NSH packet 4 mentioned in the method 200. Based on the foregoing two examples, for various specific implementations of the method 600, refer to related descriptions in the method 200.

In this embodiment, because most SF entities in an existing network support SF processing on an NSH packet, after receiving an SRv6 packet, the network device may convert the SRv6 packet into an NSH packet, and then send the NSH packet to the SF entity, so that the SF entity can perform SF processing on the NSH packet. A part that is obtained by removing an IPv6 header and an NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support SR. Technical reconstruction does not need to be performed on a large quantity of SF entities that do not support the SR in the existing network, thereby reducing costs of using an SFC for network upgrade.

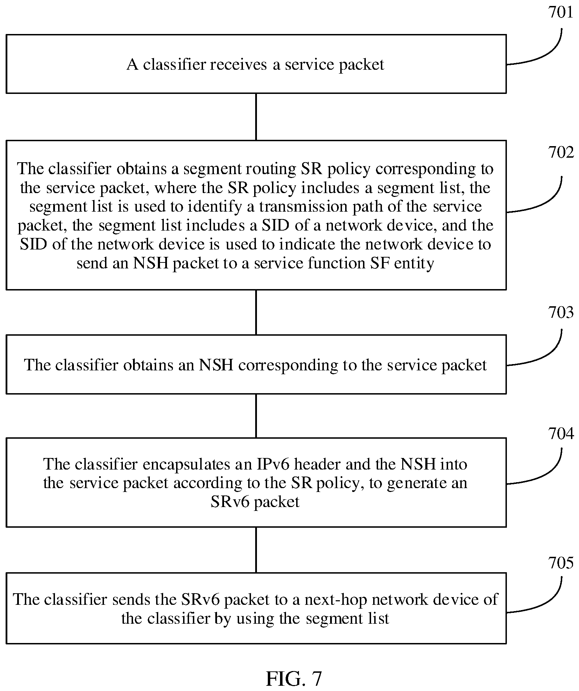

FIG. 7 is a schematic flowchart of a method 600 for implementing service function processing according to an embodiment of this application. The method 700 may include the following steps.

701. A classifier receives a service packet.

702. The classifier obtains a segment routing SR policy corresponding to the service packet, where the SR policy includes a segment list, the segment list is used to identify a transmission path of the service packet, the segment list includes a SID of a network device, and the SID of the network device is used to indicate the network device to send a network service header NSH packet to a service function SF entity.

703. The classifier obtains an NSH corresponding to the service packet.

704. The classifier encapsulates an IPv6 header and the NSH into the service packet according to the SR policy, to generate an SRv6 packet.

705. The classifier sends the SRv6 packet to a next-hop network device of the classifier by using the segment list.

In some possible implementations, that the classifier obtains the segment routing SR policy corresponding to the service packet includes:
The classifier receives the SR policy sent by a controller.

In some possible implementations, that the classifier obtains the segment routing SR policy corresponding to the service packet includes:
The classifier receives the SID sent by the network device; and
the classifier generates the SR policy based on the SID.

In some possible implementations, the SID is carried in border gateway protocol BGP link state LS type-length-value TLV information for sending.

In some possible implementations, the method 700 further includes:

The classifier receives encapsulation information used to transmit the NSH packet between the network device and the SF entity.

It may be understood that, the classifier mentioned in the method 700 may be the classifier mentioned in the method 200, the SR policy mentioned in the method 700 may be the SR policy mentioned in the method 200, the SRv6 packet mentioned in the method 700 may be the SRv6 packet 1 mentioned in the method 200, the network device mentioned in the method 700 may include the intermediate node N and/or the tail node mentioned in the method 200, and the SF entity mentioned in the method 700 may include the SF entity 1 and/or the SF entity 2 mentioned in the method 200. Therefore, for various specific implementations of the method 700, refer to related descriptions in the method 200.

In this embodiment, because most SF entities in an existing network support SF processing on an NSH packet, the classifier may encapsulate the NSH and the IPv6 header into the service packet to generate the SRv6 packet, and send the SRv6 packet, where the SID of the network device carried in the IPv6 header may be used to indicate the network device to convert the SRv6 packet into an NSH packet and send the NSH packet to the SF entity. Therefore, the SF entity can perform SF processing on the NSH packet. A part that is obtained by removing the IPv6 header and the NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support SR. Technical reconstruction does not need to be performed on a large quantity of SF entities that do not support the SR in the existing network, thereby reducing costs of using an SFC for network upgrade.

FIG. 8 is a schematic flowchart of a method 800 for implementing service function processing according to an embodiment of this application. The method 800 may include the following steps.

801. A controller receives a SID of a network device, where the SID of the network device is used to indicate the network device to send a network service header NSH packet to a service function SF entity.

802. The controller generates an SR policy of a service flow, where the SR policy includes a segment list, the segment list is used to indicate a transmission path of the service flow, and the segment list includes the SID.

803. The controller generates an NSH of the service flow.

804. The controller sends the SR policy and the NSH to a classifier.

In some possible implementations, the SID is carried in border gateway protocol BGP link state LS type-length-value TLV information for sending.

In some possible implementations, the method 800 further includes:
The controller receives encapsulation information that is sent by the network device and that is used to transmit the NSH packet between the network device and the SF; and
the controller sends the encapsulation information to the classifier.

It may be understood that, the controller mentioned in the method 800 may be the controller mentioned in the method 200, the classifier mentioned in the method 800 may be the classifier mentioned in the method 200, the SR policy mentioned in the method 800 may be the SR policy mentioned in the method 200, the network device mentioned in the method 800 may include the intermediate node N and/or the tail node mentioned in the method 200, the SF entity mentioned in the method 700 may include the SF entity 1 and/or the SF entity 2 mentioned in the method 200, and the SRv6 packet mentioned in the method 800 may include the SRv6 packet 2 and/or the SRv6 packet 4 mentioned in the method 200. Therefore, for various specific implementations of the method 800, refer to related descriptions in the method 200.

In this embodiment, because most SF entities in an existing network support SF processing on an NSH packet, the controller may deliver the SR policy and the NSH to the classifier. The SID of the network device in the segment list carried in the SR policy may be used to indicate the network device to convert an SRv6 packet into an NSH packet and send the NSH packet to the SF entity. Therefore, the classifier may encapsulate an IPv6 header and the NSH into a service packet according to the SR policy to generate the SRv6 packet, and send the SRv6 packet, where the IPv6 header carries the SID of the network device. In this way, the SF entity can perform SF processing on the NSH packet. A part that is obtained by removing an IPv6 header and an NSH from the SRv6 packet is a payload of the NSH packet. Therefore, that the SF entity performs SF processing on the NSH packet means that SF processing is performed on the SRv6 packet. It can be learned that SF processing can also be performed on the SRv6 packet when the SF entity does not support SR. Technical reconstruction does not need to be performed on a large quantity of SF entities that do not support the SR in the existing network, thereby reducing costs of using an SFC for network upgrade.

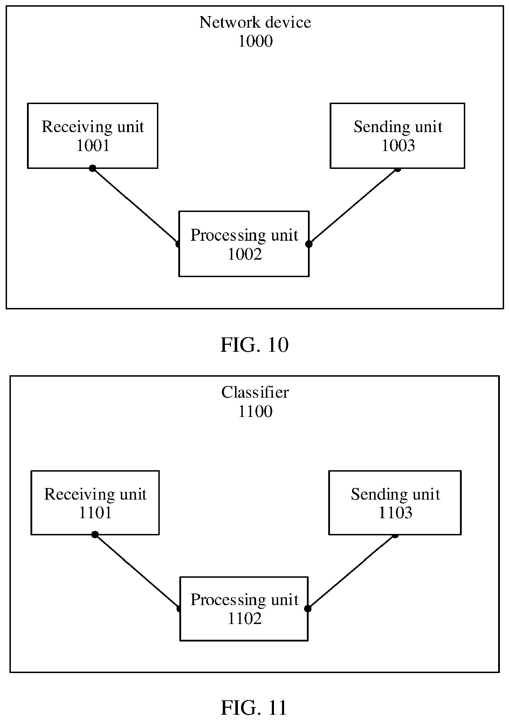

FIG. 10 is a schematic structural diagram of a network device 1000 for implementing service function processing according to an embodiment of this application. The network device 1000 includes a receiving unit 1001, a processing unit 1002, and a sending unit 1003.

The receiving unit 1001 is configured to receive a first internet protocol version 6 segment routing SRv6 packet, where the first SRv6 packet includes a first internet protocol version 6 header IPv6 header and a first network service header NSH.

The processing unit 1002 is configured to generate a first NSH packet based on the first SRv6 packet, where the first NSH packet includes a part obtained by removing the first IPv6 header from the first SRv6 packet.

The sending unit 1003 is configured to send the first NSH packet to a service function SF entity.

In some implementations, the processing unit 1002 is further configured to:
before generating the first NSH packet based on the first SRv6 packet, identify a first segment identifier SID of the network device from a destination address field of the first IPv6 header; and
determine that the first SID is used to indicate the network device to send the NSH packet to the SF entity.

In some implementations, the first NSH carries a service path identifier SPI;
after the receiving unit 1001 receives the first SRv6 packet, the processing unit 1002 is further configured to record a mapping relationship between the SPI and the first IPv6 header;
after the sending unit 1003 sends the first NSH packet to the SF entity, the receiving unit 1001 is further configured to receive a second NSH packet sent by the SF entity, where the second NSH packet includes a second NSH, and the second NSH carries the SPI; and
the processing unit 1002 is further configured to: determine the first IPv6 header based on the mapping relationship between the SPI and the first IPv6 header; replace the first SID carried in the destination address field of the first IPv6 header with a second SID of a next-hop network device of the network device, to obtain a second IPv6 header; and generate a second SRv6 packet based on the second NSH packet, where the second SRv6 packet includes the second IPv6 header, the second NSH, and a payload of the second NSH packet.

In some implementations, the first NSH carries a service path identifier SPI;
after the receiving unit 1001 receives the first SRv6 packet, the processing unit 1002 is further configured to: replace the first SID carried in the destination address field of the first IPv6 header with a second SID of a next-hop network device of the network device, to obtain a second IPv6 header; and record a mapping relationship between the SPI and the second IPv6 header;
after the sending unit 1003 sends the first NSH packet to the SF entity, the receiving unit 1001 is further configured to receive a second NSH packet sent by the SF entity, where the second NSH packet includes a second NSH, and the second NSH carries the SPI; and
the processing unit 1002 is further configured to: determine the second IPv6 header based on the mapping relationship between the SPI and the second IPv6 header; and generate a second SRv6 packet based on the second NSH packet, where the second SRv6 packet includes the second IPv6 header, the second NSH, and a payload of the second NSH packet.

In some implementations, the processing unit 1002 is further configured to obtain a function function part of the first SID, where the function part is used to indicate to send the NSH packet to the service function SF entity.

In some implementations, before the receiving unit receives the first SRv6 packet, the sending unit 1003 is further configured to advertise the first SID to a controller or a classifier.

In some implementations, the processing unit 1002 is further configured to record, by the network device, a mapping relationship between the first SID and the SF entity.

In some implementations, before the receiving unit receives the first SRv6 packet, the sending unit 1003 is further configured to advertise, to the controller or the classifier, encapsulation information used to transmit the NSH packet between the network device and the SF.

It may be understood that the network device 1000 is the intermediate node N or the tail node mentioned in the method 200. Therefore, for various specific embodiments of the network device 1000, refer to a description of the intermediate node N or the tail node in the method 200. Details are not described again in this embodiment.

FIG. 11 is a schematic structural diagram of a classifier 1100 for implementing service function processing according to an embodiment of this application. The classifier 1100 includes a receiving unit 1101, a processing unit 1102, and a sending unit 1103.

The receiving unit 1101 is configured to receive a service packet.

The processing unit 1102 is configured to: obtain a segment routing SR policy corresponding to the service packet, obtain an NSH corresponding to the service packet, and encapsulate an IPv6 header and the NSH into the service packet according to the SR policy, to generate an SRv6 packet, where the SR policy includes a segment list, the segment list is used to identify a transmission path of the service packet, the segment list includes a SID of a network device, and the SID of the network device is used to indicate the network device to send a network service header NSH packet to a service function SF entity.

The sending unit 1103 is configured to send the SRv6 packet to a next-hop network device of the classifier by using the segment list.

In some implementations, the receiving unit 1101 is further configured to receive, by the classifier, the SR policy sent by a controller.

In some implementations, the receiving unit 1101 is further configured to receive the SID sent by the network device; and
the processing unit 1102 is further configured to generate the SR policy based on the SID.

In some implementations, the receiving unit 1101 is further configured to receive encapsulation information used to transmit the NSH packet between the network device and the SF entity.

It may be understood that the classifier 1100 is the classifier mentioned in the method 200. Therefore, for various specific embodiments of the classifier 1100, refer to a description of the classifier in the method 200. Details are not described again in this embodiment.

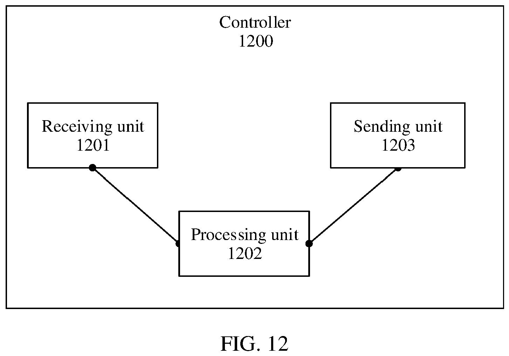

FIG. 12 is a schematic structural diagram of a controller 1200 for implementing service function processing according to an embodiment of this application. The controller 1200 includes a receiving unit 1201, a processing unit 1202, and a sending unit 1203.

The receiving unit 1201 is configured to receive a SID of a network device, where the SID of the network device is used to indicate the network device to send a network service header NSH packet to a service function SF entity.

The processing unit 1202 is configured to generate an SR policy of a service flow and an NSH of the service flow, where the SR policy includes a segment list, the segment list is used to indicate a transmission path of the service flow, and the segment list includes the SID.

The sending unit 1203 is configured to send the SR policy and the NSH to the classifier.

In some implementations, the receiving unit 1201 is further configured to receive encapsulation information that is sent by the network device and that is to transmit the NSH packet between the network device and the SF; and
the sending unit 1203 is further configured to send the encapsulation information to the classifier.

It may be understood that the controller 1200 is the controller mentioned in the method 200. Therefore, for various specific embodiments of the controller 1200, refer to a description of the controller in the method 200. Details are not described again in this embodiment.

In addition, an embodiment of this application further provides a network device. The network device includes a processor and a memory. The memory stores instructions. When the processor executes the instructions, the network device is enabled to perform the method 600.

In addition, an embodiment of this application further provides a classifier. The classifier includes a processor and a memory. The memory stores instructions. When the processor executes the instructions, the classifier is enabled to perform the method 700.

In addition, an embodiment of this application further provides a controller. The controller includes a processor and a memory. The memory stores instructions. When the processor executes the instructions, the controller is enabled to perform the method 800.

In addition, an embodiment of this application further provides a computer-readable storage medium. The computer-readable storage medium stores instructions. When the instructions are run on a computer or a processor, the computer or the processor is enabled to perform the method 600, the method 700, or the method 800.

"First" in terms such as the "first SRv6 packet" and the "first NSH packet" mentioned in the embodiments of this application is merely used as a name identifier, but does not represent first in sequence. This rule is also applicable to "second" and the like.

It can be learned from the foregoing descriptions of the implementations that, a person skilled in the art may clearly understand that a part or all of steps of the methods in the foregoing embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM) /RAM, a magnetic disk, or an optical disc, and include several instructions for instructing a computer device (which may be a personal computer, a server, or a network communications device such as a router) to perform the methods described in the embodiments or some parts of the embodiments of this application.

The embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for related parts, reference may be made to the description part of the method embodiment. The described device and system embodiments are merely examples. The modules described as separate parts may or may not be physically separate, and parts displayed as modules may or may not be physical modules, may be located in one position, or may be distributed on a plurality of network units. A part or all of the modules may be selected according to actual needs to achieve the objectives of the solutions of the embodiments. A person of ordinary skill in the art may understand and implement the embodiments without creative efforts.

The foregoing descriptions are merely example implementations of this application, but are not intended to limit the protection scope of this application.

## Claims

1. A method for implementing service function processing, comprising:
receiving, by a network device, a first internet protocol version 6 segment routing SRv6 packet, wherein the first SRv6 packet comprises a first internet protocol version 6 header IPv6 header and a first network service header NSH;
generating, by the network device, a first NSH packet based on the first SRv6 packet, wherein the first NSH packet comprises a part obtained by removing the first IPv6 header from the first SRv6 packet; and
sending, by the network device, the first NSH packet to a service function SF entity.

2. The method according to claim 1, wherein before the generating, by the network device, a first NSH packet based on the first SRv6 packet, the method further comprises:
identifying, by the network device, a first segment identifier SID of the network device from a destination address field of the first IPv6 header; and
determining, by the network device, that the first SID is used to indicate the network device to send a NSH packet to the SF entity.

3. The method according to claim 2, wherein the first NSH carries a service path identifier SPI, and the method further comprises:
after receiving the first SRv6 packet, recording, by the network device, a mapping relationship between the SPI and the first IPv6 header;
after sending the first NSH packet to the SF entity, receiving, by the network device, a second NSH packet sent by the SF entity, wherein the second NSH packet comprises a second NSH, and the second NSH carries the SPI;
determining, by the network device, the first IPv6 header based on the mapping relationship between the SPI and the first IPv6 header;
replacing, by the network device, the first SID carried in the destination address field of the first IPv6 header with a second SID of a next-hop network device of the network device, to obtain a second IPv6 header; and
generating, by the network device, a second SRv6 packet based on the second NSH packet, wherein the second SRv6 packet comprises the second IPv6 header, the second NSH, and a payload of the second NSH packet.

4. The method according to claim 2, wherein the first NSH carries a service path identifier SPI, and the method further comprises:
after receiving the first SRv6 packet, replacing, by the network device, the first SID carried in the destination address field of the first IPv6 header with a second SID of a next-hop network device of the network device, to obtain a second IPv6 header;
recording, by the network device, a mapping relationship between the SPI and the second IPv6 header;
after sending the first NSH packet to the SF entity, receiving, by the network device, a second NSH packet sent by the SF entity, wherein the second NSH packet comprises a second NSH, and the second NSH carries the SPI;
determining, by the network device, the second IPv6 header based on the mapping relationship between the SPI and the second IPv6 header; and
generating, by the network device, a second SRv6 packet based on the second NSH packet, wherein the second SRv6 packet comprises the second IPv6 header, the second NSH, and a payload of the second NSH packet.

5. The method according to any one of claims 2 to 4, wherein the determining, by the network device, that the first SID is used to indicate to send the NSH packet to the service function SF entity comprises:
obtaining, by the network device, a function function part of the first SID, wherein the function part is used to indicate to send the NSH packet to the service function SF entity.

6. The method according to any one of claims 2 to 5, further comprising:
before receiving the first SRv6 packet, advertising, by the network device, the first SID to a controller or a classifier.

7. The method according to claim 6, further comprising: recording, by the network device, a mapping relationship between the first SID and the SF entity.

8. The method according to any one of claims 1 to 7, further comprising:
before receiving the first SRv6 packet, advertising, by the network device to the controller or the classifier, encapsulation information used to transmit the NSH packet between the network device and the SF entity.

9. A method for implementing service function processing, comprising:
receiving, by a classifier, a service packet;
obtaining, by the classifier, a segment routing SR policy corresponding to the service packet, wherein the SR policy comprises a segment list, the segment list is used to identify a transmission path of the service packet, the segment list comprises a SID of a network device, and the SID of the network device is used to indicate the network device to send a network service header NSH packet to a service function SF entity;
obtaining, by the classifier, an NSH corresponding to the service packet;
encapsulating, by the classifier, an IPv6 header and the NSH into the service packet according to the SR policy, to generate an SRv6 packet; and
sending, by the classifier, the SRv6 packet to a next-hop network device of the classifier by using the segment list.

10. The method according to claim 9, wherein the obtaining, by the classifier, a segment routing SR policy corresponding to the service packet comprises:
receiving, by the classifier, the SR policy sent by a controller.

11. The method according to claim 9, wherein the obtaining, by the classifier, a segment routing SR policy corresponding to the service packet comprises:
receiving, by the classifier, the SID sent by the network device; and
generating, by the classifier, the SR policy based on the SID.

12. The method according to any one of claims 9 to 11, further comprising:
receiving, by the classifier, encapsulation information used to transmit the NSH packet between the network device and the SF entity.

13. A method for implementing service function processing, comprising:
receiving, by a controller, a SID of a network device, wherein the SID of the network device is used to indicate the network device to send a network service header NSH packet to a service function SF entity;
generating, by the controller, an SR policy of a service flow, wherein the SR policy comprises a segment list, the segment list is used to indicate a transmission path of the service flow, and the segment list comprises the SID;
generating, by the controller, an NSH of the service flow; and
sending, by the controller, the SR policy and the NSH to a classifier.

14. The method according to claim 13, further comprising:
receiving, by the controller, encapsulation information that is sent by the network device and that is used to transmit the NSH packet between the network device and the SF; and
sending, by the controller, the encapsulation information to the classifier.

15. A network device for implementing service function processing, comprising:
a receiving unit, configured to receive a first internet protocol version 6 segment routing SRv6 packet, wherein the first SRv6 packet comprises a first internet protocol version 6 header IPv6 header and a first network service header NSH;
a processing unit, configured to generate a first NSH packet based on the first SRv6 packet, wherein the first NSH packet comprises a part obtained by removing the first IPv6 header from the first SRv6 packet; and
a sending unit, configured to send the first NSH packet to a service function SF entity.

16. The network device according to claim 15, wherein the processing unit is further configured to:
before generating the first NSH packet based on the first SRv6 packet, identify a first segment identifier SID of the network device from a destination address field of the first IPv6 header; and
determine that the first SID is used to indicate the network device to send the NSH packet to the SF entity.

17. The network device according to claim 16, wherein the first NSH carries a service path identifier SPI;
after the receiving unit receives the first SRv6 packet, the processing unit is further configured to record a mapping relationship between the SPI and the first IPv6 header;
after the sending unit sends the first NSH packet to the SF entity, the receiving unit is further configured to receive a second NSH packet sent by the SF entity, wherein the second NSH packet comprises a second NSH, and the second NSH carries the SPI; and
the processing unit is further configured to: determine the first IPv6 header based on the mapping relationship between the SPI and the first IPv6 header; replace the first SID carried in the destination address field of the first IPv6 header with a second SID of a next-hop network device of the network device, to obtain a second IPv6 header; and generate a second SRv6 packet based on the second NSH packet, wherein the second SRv6 packet comprises the second IPv6 header, the second NSH, and a payload of the second NSH packet.

18. The network device according to claim 16, wherein the first NSH carries a service path identifier SPI;
after the receiving unit receives the first SRv6 packet, the processing unit is further configured to: replace the first SID carried in the destination address field of the first IPv6 header with a second SID of a next-hop network device of the network device, to obtain a second IPv6 header; and record a mapping relationship between the SPI and the second IPv6 header;
after the sending unit sends the first NSH packet to the SF entity, the receiving unit is further configured to receive a second NSH packet sent by the SF entity, wherein the second NSH packet comprises a second NSH, and the second NSH carries the SPI; and
the processing unit is further configured to: determine the second IPv6 header based on the mapping relationship between the SPI and the second IPv6 header; and generate a second SRv6 packet based on the second NSH packet, wherein the second SRv6 packet comprises the second IPv6 header, the second NSH, and a payload of the second NSH packet.

19. The network device according to any one of claims 16 to 18, wherein the processing unit is further configured to obtain a function function part of the first SID, wherein the function part is used to indicate to send the NSH packet to the service function SF entity.

20. The network device according to any one of claims 16 to 19, wherein before the receiving unit receives the first SRv6 packet, the sending unit is further configured to advertise the first SID to a controller or a classifier.

21. The network device according to claim 20, wherein the processing unit is further configured to record a mapping relationship between the first SID and the SF entity.

22. The network device according to any one of claims 15 to 21, wherein before the receiving unit receives the first SRv6 packet, the sending unit is further configured to advertise, to the controller or the classifier, encapsulation information used to transmit the NSH packet between the network device and the SF.

23. A classifier for implementing service function processing, comprising:
a receiving unit, configured to receive a service packet;
a processing unit, configured to: obtain a segment routing SR policy corresponding to the service packet, obtain an NSH corresponding to the service packet, and encapsulate an IPv6 header and the NSH into the service packet according to the SR policy, to generate an SRv6 packet, wherein the SR policy comprises a segment list, the segment list is used to identify a transmission path of the service packet, the segment list comprises a SID of a network device, and the SID of the network device is used to indicate the network device to send a network service header NSH packet to a service function SF entity; and
a sending unit, configured to send the SRv6 packet to a next-hop network device of the classifier by using the segment list.

24. The classifier according to claim 23, wherein the receiving unit is further configured to receive the SR policy sent by a controller.

25. The classifier according to claim 23, wherein
the receiving unit is further configured to receive the SID sent by the network device; and
the processing unit is further configured to generate the SR policy based on the SID.

26. The classifier according to any one of claims 23 to 25, wherein the receiving unit is further configured to receive encapsulation information used to transmit the NSH packet between the network device and the SF entity.

27. A controller for implementing service function processing, comprising:
a receiving unit, configured to receive a SID of a network device, wherein the SID of the network device is used to indicate the network device to send a network service header NSH packet to a service function SF entity;
a processing unit, configured to generate an SR policy of a service flow and an NSH of the service flow, wherein the SR policy comprises a segment list, the segment list is used to indicate a transmission path of the service flow, and the segment list comprises the SID; and
a sending unit, configured to send the SR policy and the NSH to a classifier.

28. The controller according to claim 27, wherein
the receiving unit is further configured to receive encapsulation information that is sent by the network device and that is used to transmit the NSH packet between the network device and the SF; and
the sending unit is further configured to send the encapsulation information to the classifier.
